# EUROPÄISCHE PATENTANMELDUNG

(11) **EP 2 468 687 A1**
(43) Veröffentlichungstag der Anmeldung: **27.06.2012**
(21) Anmeldenummer: 12158186.2
(22) Anmeldetag: 20.01.2010
(51) Int. Cl.: C02F 3/28, B01J 19/00, C02F 11/04

(54) **Schlammaustragsystem für biologische Abwasserreaktoren**

(30) Priorität: 09.02.2009 DE 102009008043
(62) Teilanmeldung aus: 10701134.8
(71) Anmelder: Voith Patent GmbH, 89520 Heidenheim (DE)
(72) Erfinder: Gommel, Axel, 88214 Ravensburg (DE); Efinger, Dieter, 84036 Kumhausen (DE); Gessler, Werner, 88213 Ravensburg (DE); Mulder, Ronald, 1811 BN Alkmaar (NL)

(57) **Zusammenfassung**

Ein Reaktor zur biologischen, insbesondere anaeroben, Reinigung von Abwasser umfasst einen Reaktorbehälter mit einem zumindest im Wesentlichen flachen oder runden Boden, wenigstens eine im unteren Bereich des Reaktorbehälters angeordnete Zulaufleitung zur Zuführung von zu reinigendem Abwasser in den Reaktor, wenigstens eine Flüssigkeitsabfuhrleitung zur Abführung von gereinigtem Abwasser aus dem Reaktor und wenigstens eine im unteren Bereich des Reaktorbehälters angeordnete Feststoffabfuhrleitung zur Abführung von Feststoff aus dem Reaktor, wobei in dem unteren Bereich des Reaktorbehälters wenigstens ein Ablenkmittel vorgesehen ist, welches wenigstens ein schräg verlaufendes Teilstück umfasst und derart ausgestaltet und/oder angeordnet ist, dass in dem Reaktor aus dem oberen Reaktorbereich nach unten sinkender Feststoff so umgelenkt wird, dass dieser in dem Bereich der wenigstens einen Feststoffabfuhrleitung sedimentiert und so über die wenigstens eine Feststoffabfuhrleitung aus dem Reaktor abführbar ist.

## Beschreibung

Die vorliegende Erfindung betrifft einen Reaktor zur biologischen, insbesondere anaeroben, Reinigung von Abwasser, welcher einen Reaktorbehälter mit einem zumindest im Wesentlichen flachen oder runden Boden, wenigstens eine im unteren Bereich des Reaktorbehälters angeordnete Zulaufleitung zur Zuführung von zu reinigendem Abwasser in den Reaktor, wenigstens eine Flüssigkeitsabfuhrleitung zur Abführung von gereinigtem Abwasser aus dem Reaktor und wenigstens eine im unteren Bereich des Reaktorbehälters angeordnete Feststoffabfuhrleitung zur Abführung von Feststoff aus dem Reaktor umfasst.

Zur Abwasserreinigung sind eine Vielzahl von mechanischen, chemischen sowie biologischen Verfahren und entsprechende Reaktoren bekannt. Bei der biologischen Abwasserreinigung wird das zu reinigende Abwasser mit aeroben oder anaeroben Mikroorganismen kontaktiert, welche die in dem Abwasser enthaltenen organischen Verunreinigungen im Falle von aeroben Mikroorganismen überwiegend zu Kohlendioxid, Biomasse und Wasser und im Falle von anaeroben Mikroorganismen vorwiegend zu Kohlendioxid und Methan und nur zu einem geringen Teil zu Biomasse abbauen. Dabei werden die biologischen Abwasserreinigungsverfahren in jüngster Zeit zunehmend mit anaeroben Mikroorganismen durchgeführt, wobei die Reaktoren je nach der Art und Form der eingesetzten Biomasse für die anaerobe Abwasserreinigung in Kontaktschlammreaktoren, UASB-Reaktoren, EGSB-Reaktoren, Festbettreaktoren und Fließbettreaktoren unterteilt werden. Während die Mikroorganismen bei Festbettreaktoren an ortsfesten Trägermaterialien und die Mikroorganismen bei Fließbettreaktoren auf frei beweglichen, kleinem Trägermaterial anhaften, werden die Mikroorganismen bei den UASB- und EGSB-Reaktoren in Form von sogenannten Pellets eingesetzt.

Bei den UASB- und EGSB-Reaktoren wird dem Reaktor über einen Zulauf im unteren Reaktorbereich kontinuierlich zu reinigendes Abwasser oder eine Mischung aus zu reinigendem Abwasser und bereits gereinigtem Abwasser aus dem Ablauf des Anaerobreaktors zugeführt und durch ein oberhalb des Zulaufs befindliches, Mikroorganismenpellets enthaltendes Schlammbett geführt. Beim Abbau der organischen Verbindungen aus dem Abwasser bilden die Mikroorganismen insbesondere Methan und Kohlendioxid enthaltendes Gas (welches auch als Biogas bezeichnet wird), das sich teilweise in Form kleiner Bläschen an den Mikroorganismenpellets anlagert und teilweise in Form freier Gasbläschen in dem Reaktor nach oben steigt. Aufgrund der angelagerten Gasbläschen sinkt das spezifische Gewicht der Pellets, weshalb die Pellets in dem Reaktor nach oben steigen. Um das gebildete Biogas und die aufsteigenden Pellets von dem Wasser zu trennen, sind in dem mittleren und/oder oberen Teil des Reaktors Abscheider zumeist in Form von Gashauben angeordnet, unter deren First sich Biogas ansammelt, welches ein Gaspolster ausbildet. Von Gas und Mikroorganismenpellets befreites, gereinigtes Wasser steigt in dem Reaktor nach oben und wird am oberen Ende des Reaktors über Überläufe abgezogen.

Während des Reaktorbetriebs sinken zudem kontinuierlich Feststoffe in dem Reaktor nach unten und lagern sich auf dem Reaktorboden ab, von dem diese über eine Feststoffabfuhrleitung aus dem Reaktor abgeführt werden. Dabei handelt es sich zum einen um in dem Abwasser enthaltene Feststoffe und zum anderen um Feststoffe, welche sich erst in dem Reaktor bilden, wie beispielsweise insbesondere in dem Fall, dass Abwasser mit einem hohen Gehalt an gelöstem Kalzium, wie beispielsweise Abwasser in der Papierindustrie, eingesetzt wird. Auf Grund der chemischen Verhältnisse fällt ein Teil des Kalziums als festes Kalzium-Karbonat aus. Da die Feststoffe gleichmäßig über den Reaktorquerschnitt sedimentieren, können in der Praxis nicht alle Feststoffsedimente über die Feststoffabfuhrleitung aus dem Reaktor abgeführt werden, so dass sich während des Reaktorbetriebs zunehmend Sediment großflächig am Reaktorboden und insbesondere an Stellen mit rechten Winkeln des Reaktorbehälters ansammelt. Um diese Sedimente aus dem Reaktor zu entfernen, muss der Reaktor von Zeit zu Zeit stillgelegt werden.

Um dieses Problem zu überwinden, wurden bereits, beispielsweise in der DE 40 42 223 A1, Reaktoren zur biologischen Reinigung von Abwasser vorgeschlagen, bei denen der untere Reaktorabschnitt nach unten konisch verjüngt ausgebildet ist. Dadurch wird gewährleistet, dass sich zumindest der Hauptteil des Sediments in der Spitze des Konus ansammelt, von welcher dieser leicht über eine Feststoffabfuhrleitung aus dem Reaktor abgeführt werden kann. Allerdings muss dieser untere, konische Reaktorabschnitt, um das Gewicht des in dem u.U. mehrere Meter hohen Reaktors enthaltenen Abwassers standhalten zu können, aus besonders stabilem Material gefertigt werden. Zudem ist die Fertigung eines solchen Reaktors sehr aufwendig und daher teuer.

Aufgabe der vorliegenden Erfindung ist es, einen Reaktor zur biologischen, insbesondere anaeroben, Reinigung von Abwasser bereitzustellen, aus dem während dessen Betrieb anfallende Feststoffe einfach und insbesondere vollständig entfernt werden können und welcher dennoch konstruktiv einfach und kostengünstig herstellbar ist. Insbesondere soll der Reaktor auch für die Reinigung von sehr kalkhaltigem Abwasser, wie beispielsweise Abwasser aus der Papierindustrie, geeignet sein. Dabei wird insbesondere nachfolgend unter Pellets granulierter Bioschlamm verstanden.

Erfindungsgemäß wird diese Aufgabe gelöst durch die Bereitstellung eines Reaktors zur biologischen, insbesondere anaeroben, Reinigung von Abwasser, welcher einen Reaktorbehälter mit einem zumindest im Wesentlichen flachen oder runden Boden, wenigstens eine im unteren Bereich des Reaktorbehälters angeordnete Zulaufleitung zur Zuführung von zu reinigendem Abwasser in den Reaktor, wenigstens eine Flüssigkeitsabfuhrleitung zur Abführung von gereinigtem Abwasser aus dem Reaktor und wenigstens eine im unteren Bereich des Reaktorbehälters angeordnete Feststoffabfuhrleitung zur Abführung von Feststoff aus dem Reaktor umfasst, wobei in dem unteren Bereich des Reaktorbehälters wenigstens ein Ablenkmittel vorgesehen ist, welches wenigstens ein schräg verlaufendes Teilstück umfasst und derart ausgestaltet und/oder angeordnet ist, dass in dem Reaktor aus dem oberen Reaktorbereich nach unten sinkender Feststoff so umgelenkt wird, dass dieser in dem Bereich der wenigstens einen Feststoffabfuhrleitung sedimentiert und so über die wenigstens eine Feststoffabfuhrleitung aus dem Reaktor abführbar ist.

Indem in dem unteren Bereich des Reaktorbehälters wenigstens ein Ablenkmittel vorgesehen ist, welches wenigstens ein schräg verlaufendes Teilstück umfasst und derart ausgestaltet und/oder angeordnet ist, dass in dem Reaktor aus dem oberen Reaktorbereich nach unten sinkender Feststoff so umgelenkt wird, dass dieser in dem Bereich der Feststoffabfuhrleitung sedimentiert und so über die Feststoffabfuhrleitung aus dem Reaktor abführbar ist, wird erreicht, dass sich der während des Reaktorbetriebs nach unten sinkende Feststoff nicht gleichmäßig und großflächig auf dem Reaktorboden absetzt, sondern gezielt zu der Stelle des Reaktorbodens geführt wird, an der sich die Feststoffabfuhrleitung(en) befindet/befinden. Dadurch wird durch eine konstruktiv einfache und kostengünstige Maßnahme erreicht, dass der während des Reaktorbetriebs nach unten sinkende Feststoff vollständig oder zumindest nahezu vollständig aus dem Reaktor entfernt werden kann und somit eine periodische Außerbetriebnahme des Reaktors zwecks Entfernung von sich ansammelndem Sediment nicht erforderlich ist. Aus diesen Gründen kann bei dem erfindungsgemäßen Reaktor auf einen unteren, sich konisch nach unten verjüngenden Reaktorabschnitt verzichtet werden. Anstatt dessen ist in dem erfindungsgemäßen Reaktor ein konstruktiv einfacherer und kostengünstigerer Flachboden oder Rundboden vorgesehen.

Der erfindungsgemäße Reaktor kann jede beliebige Querschnittsform aufweisen, beispielsweise einen runden, ovalen, polygonalen, rechteckigen oder quadratischen Querschnitt.

Erfindungsgemäß ist in dem unteren Bereich des Reaktorbehälters wenigstens ein Ablenkmittel vorgesehen, welches wenigstens ein, bezogen auf die Horinzontale, schräg verlaufendes Teilstück umfasst und derart ausgestaltet und/oder angeordnet ist, dass in dem Reaktor aus dem oberen Reaktorbereich nach unten sinkender Feststoff so umgelenkt wird, dass dieser in dem Bereich der Feststoffabfuhrleitung sedimentiert und so über die Feststoffabfuhrleitung aus dem Reaktor abführbar ist, um damit die vollständige Abführung von bei dem Betrieb des Reaktors anfallendem Sediment aus dem Reaktor zu ermöglichen. Grundsätzlich kann das bzw. können die wenigstens ein schräg verlaufendes Teilstück umfassende(n) Ablenkmittel mit der Schräge in Richtung der Feststoffabfuhrleitung und/oder quer dazu angeordnet sein, solange diese eine vorstehend dargelegte Umlenkung des Feststoffs bewirken. Prinzipiell kann das bzw. können die Ablenkmittel eben oder rund ausgebildet sein und jede beliebige Querschnittsform aufweisen. Auch bezüglich der Anbringung des wenigstens einen Ablenkmittels ist die vorliegende Erfindung nicht beschränkt. Daher kann das wenigstens eine Ablenkmittel freitragend sein oder fest mit dem Reaktor, beispielsweise mit der Reaktorwand, verbunden sein.

Gemäß einer ersten besonders bevorzugten Ausführungsform der vorliegenden Erfindung ist das wenigstens eine Ablenkmittel eine Ablenkplatte, welche, bezogen auf die Horizontale, eine Neigung (□) zwischen 10° und 80°, vorzugsweise zwischen 20° und 70°, besonders bevorzugt zwischen 30° und 60° und ganz besonders bevorzugt zwischen 35° und 50° aufweist. Dadurch kann eine zuverlässige und insbesondere vollständige Umlenkung des in dem Reaktor herabsinkenden Feststoffs erreicht werden, und sichergestellt werden, dass kein Feststoff auf dem/den Ablenkmittel(n) haften bleibt.

In Weiterbildung des Erfindungsgedankens ist es gemäß einer weiteren bevorzugten Ausführungsform der vorliegenden Erfindung vorgesehen, die wenigstens eine Ablenkplatte, von der Reaktoraußenwand aus zu der Reaktormitte gesehen, schräg nach unten anzuordnen. Dadurch wird erreicht, dass der in dem Reaktor herabsinkende Feststoff in die Mitte des Reaktors geleitet wird, so dass nur eine und mithin weniger Feststoffabfuhrleitungen erforderlich sind, als wenn der Feststoff zu der Reaktoraußenwand geleitet wird.

Um eine mechanische Belastung der wenigstens einen Ablenkplatte beim Betrieb des Reaktors aufgrund des Gewichts des in dem Reaktor befindlichen Abwassers zu vermeiden und so eine konstruktiv einfache und kostengünstige Ausgestaltung der wenigstens einen Ablenkplatte zu ermöglichen, ist die wenigstens eine Ablenkplatte vorzugsweise so angeordnet, dass diese von in dem Reaktor befindlichem Abwasser hinterflutbar ist. Auf diese Weise ist die wenigstens eine Ablenkplatte während des Reaktorbetriebs nur minimalen mechanischen Belastungen ausgesetzt.

Eine wirkungsvolle Umlenkung des Feststoffs kann in dem Reaktor beispielsweise erzielt werden, wenn in dem unteren Bereich des Reaktorbehälters zwei Ablenkplatten vorgesehen sind, welche sich jeweils beabstandet voneinander von dem Bereich der Reaktormitte aus in Richtung zu der Reaktoraußenwand hin nach schräg oben erstrecken. Vorzugsweise enden die beiden Ablenkplatten mit einem Abstand zu der Reaktoraußenwand, so dass diese zur Minimierung der mechanischen Belastung hinterflutbar sind. Diese Variante ist insbesondere für Reaktoren mit einem rechteckigen, insbesondere quadratischen, Querschnitt geeignet.

Um zuverlässig sicherzustellen, dass der über den gesamten Querschnitt des Reaktors herabsinkende Feststoff zu der Reaktormitte umgelenkt wird, in welcher bei dieser Ausführungsform die Feststoffabfuhrleitung vorgesehen ist, wird es in Weiterbildung des Erfindungsgedankens vorgeschlagen, die beiden Ablenkplatten derart groß vorzusehen, dass von diesen, in der Summe, 10 bis 95 %, bevorzugt 30 bis 90 % und besonders bevorzugt 70 bis 90 % des Reaktorquerschnitts ausgefüllt werden.

Vorzugsweise sind die beiden Ablenkplatten bei der vorgenannten Ausführungsform in dem Bereich der Reaktormitte so voneinander beabstandet, dass zwischen den beiden Ablenkplatten ein rinnenförmiger Spalt ausgebildet ist. Die Feststoffabfuhrleitung mündet in diesem Fall bevorzugt in den Bereich des rinnenförmigen Spalts.

Alternativ zu der vorstehenden Variante mit zwei Ablenkplatten können in dem unteren Bereich des Reaktorbehälters beispielsweise auch vier Ablenkplatten vorgesehen sein, welche sich jeweils von dem Bereich der Reaktormitte aus in Richtung zu der Reaktoraußenwand hin nach schräg oben erstrecken, wobei jeweils zwei der vier Ablenkplatten über jeweils eine ihrer Seitenflächen miteinander verbunden sind, so dass die vier Ablenkplatten in der Form eines Pyramidenstumpfes angeordnet sind. Auch diese Variante ist insbesondere für Reaktoren mit einem rechteckigen, insbesondere quadratischen, Querschnitt geeignet.

Bei dieser Variante sind die Ablenkplatten ebenfalls vorzugsweise hinterflutbar, was beispielsweise dadurch erreicht werden kann, dass die vier Ablenkplatten mit einem Abstand zu der Reaktoraußenwand enden.

Vorzugsweise werden von den vier Ablenkplatten, in der Summe, 10 bis 95 %, bevorzugt 30 bis 90 % und besonders bevorzugt 70 bis 90 % des Reaktorquerschnitts ausgefüllt, um zuverlässig eine Umlenkung des über den gesamten Querschnitt des Reaktors herabsinkenden Feststoffs zu der Reaktormitte sicherzustellen.

Die vier Ablenkplatten können in dem Bereich der Reaktormitte so voneinander beabstandet sein, dass zwischen den vier Ablenkplatten eine, vom Querschnitt aus gesehen, rechteckige, quadratische, ovale oder kreisrunde Öffnung ausgebildet wird. Die Feststoffabfuhrleitung mündet vorzugsweise in den Bereich der Öffnung. Gemäß einer zweiten besonders bevorzugten Ausführungsform der vorliegenden Erfindung ist in dem unteren Bereich des Reaktorbehälters ein Ablenkmittel vorgesehen, das die Form eines, von dem Reaktorboden aus gesehen, umgekehrten Hohlkegelstumpfs aufweist, wobei dieser in dem Reaktor vorzugsweise mittig angeordnet ist. Auch auf diese Weise wird mithilfe eines konstruktiv einfachen, kostengünstig herstellbaren Ablenkmittels eine zuverlässige Umlenkung des in dem Reaktor nach unten herabsinkenden Feststoffs in den Bereich der Feststoffabfuhrleitungsmündung erreicht. Diese Variante ist insbesondere für Reaktoren mit einem runden oder ovalen Querschnitt geeignet.

Auch bei dieser Variante ist das Ablenkmittel vorzugsweise hinterflutbar, weswegen der Außenrand des Hohlkegelstumpfs bevorzugt von der Reaktoraußenwand beabstandet ist.

Gute Ergebnisse werden insbesondere erhalten, wenn von dem Hohlkegelstumpf 10 bis 95 %, bevorzugt 30 bis 90 % und besonders bevorzugt 70 bis 90 % des Reaktorquerschnitts ausgefüllt werden.

Bei dieser Ausführungsform mündet die wenigstens eine Feststoffabfuhrleitung vorzugsweise in den Bereich der auf der Deckfläche des Hohlkegelstumpfs vorgesehenen Öffnung, welche jede beliebige Querschnittsform, beispielsweise kreisrund, oval, rechteckig oder quadratisch, aufweisen kann.

Gemäß einer dritten besonders bevorzugten Ausführungsform der vorliegenden Erfindung ist das wenigstens eine Ablenkmittel auf dem Reaktorboden angeordnetes Schüttgut, welches vorzugsweise in der Form eines negativen Kegels angeordnet ist. Dabei sollten die Zulaufleitungen oberhalb des Schüttgutkegels enden. Zusätzlich dazu, dass auch auf diese Weise mithilfe eines konstruktiv einfachen, kostengünstig herstellbaren Ablenkmittel eine zuverlässige Umlenkung des in dem Reaktor nach unten herabsinkenden Feststoffs in den Bereich der Feststoffabfuhrleitungsmündung erreicht wird, weist diese Ausführungsform den Vorteil auf, dass das Ablenkmittel besonders kostengünstig ist.

Bei dieser Ausführungsform ist die wenigstens eine Feststoffabfuhrleitung vorzugsweise in dem Bereich der Spitze des negativen Kegels aus Schüttgut vorgesehen.

Bei dieser Ausführungsform kann auf dem Reaktorboden in dem Bereich der Reaktormitte eine sich vertikal nach oben erstreckende Trennwand vorgesehen sein und zwischen den beiden Seitenflächen der Trennwand und der Reaktoraußenwand als Ablenkmittel jeweils Schüttgut vorgesehen sein, das jeweils in der Form eines negativen Kegels angeordnet ist.

Vorzugsweise sind bei der letztgenannten Variante in dem Reaktor zwei Feststoffabfuhrleitungen vorgesehen, von denen jede jeweils in den Bereich der Spitze eines der beiden negativen Kegel aus Schüttgut mündet.

In Weiterbildung des Erfindungsgedankens wird es vorgeschlagen, als Schüttgut Sediment vorzusehen, welches beim Betrieb des Reaktors aus dem zu reinigenden Abwasser sedimentiert.

Ein weiterer Gegenstand der vorliegenden Erfindung ist ein Verfahren zur biologischen, insbesondere anaeroben, Reinigung von Abwasser, bei dem einem Reaktor, welcher einen Reaktorbehälter mit einem zumindest im Wesentlichen flachen oder runden Boden, wenigstens eine im unteren Bereich des Reaktorbehälters angeordnete Zulaufleitung zur Zuführung von zu reinigendem Abwasser in den Reaktor, wenigstens eine Flüssigkeitsabfuhrleitung zur Abführung von gereinigtem Abwasser aus dem Reaktor und wenigstens eine im unteren Bereich des Reaktorbehälters angeordnete Feststoffabfuhrleitung zur Abführung von Feststoff aus dem Reaktor umfasst, wobei in dem unteren Bereich des Reaktorbehälters wenigstens ein Ablenkmittel vorgesehen ist, welches wenigstens ein schräg verlaufendes Teilstück umfasst und derart ausgestaltet und/oder angeordnet ist, dass in dem Reaktor aus dem oberen Reaktorbereich nach unten sinkender Feststoff so umgelenkt wird, dass dieser in dem Bereich der wenigstens einen Feststoffabfuhrleitung sedimentiert, zu reinigendes Abwasser zugeführt wird und Sediment über die wenigstens eine Feststoffabfuhrleitung aus dem Reaktor abgeführt wird.

Nachfolgend wird die vorliegende Erfindung rein beispielhaft anhand vorteilhafter Ausführungsformen und unter Bezugnahme auf die beigefügten Zeichnungen beschrieben.

Dabei zeigen:
- Fig. 1: eine schematische Längsschnittsansicht eines Reaktors zur anaeroben Reinigung von Abwasser gemäß eines Ausführungsbeispiels der vorliegenden Erfindung,
- Fig. 2: eine schematische Längsschnittsansicht des unteren Abschnitts eines Reaktors zur anaeroben Reinigung von Abwasser gemäß eines weiteren Ausführungsbeispiels der vorliegenden Erfindung und
- Fig. 3: eine schematische Längsschnittsansicht des unteren Abschnitts eines Reaktors zur anaeroben Reinigung von Abwasser gemäß eines weiteren Ausführungsbeispiels der vorliegenden Erfindung.

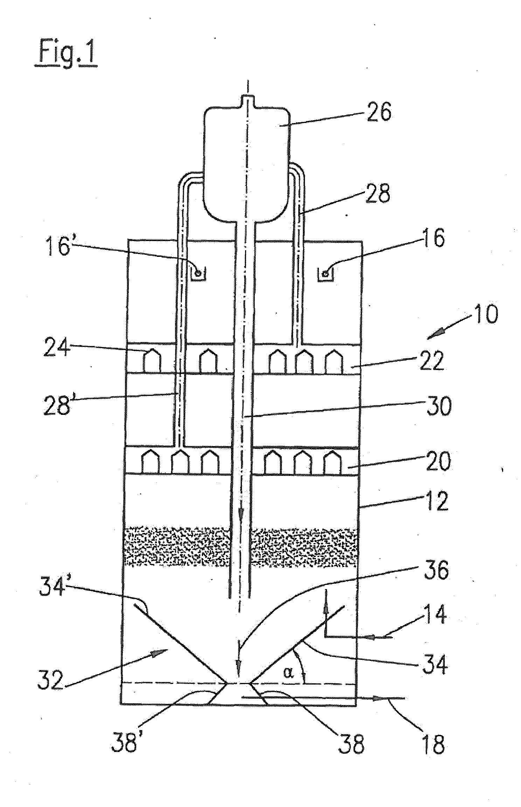

Der in der Fig. 1 schematisch im Längsschnitt dargestellte Bioreaktor 10 umfasst einen Reaktorbehälter 12 mit einem flachen Boden. Der Querschnitt des Reaktors kann rund, oval, polygonal, rechteckig oder quadratisch sein.

In den Reaktor 10 führt eine Zulaufleitung 14 zur Zuführung von zu reinigendem Abwasser. Zudem weist der Reaktor 10 zwei Flüssigkeitsabfuhrleitungen 16, 16' zur Abführung von gereinigtem Abwasser und eine Feststoffabfuhrleitung 18 zur Abführung von Feststoff aus dem Reaktor 10 auf.

In dem mittleren und oberen Reaktorbehälter 12 befinden sich zwei Abscheider 20, 22, welche jeweils mehrere Gashauben 24 aufweisen. In der Praxis besteht jeder der Abscheider 20, 22 aus mehreren Lagen an Gashauben 24; in der vorliegenden Fig. 1 ist jedoch aus Einfachheitsgründen pro Abscheider 20, 22 jeweils nur eine Lage Gashauben 24 dargestellt. Alternativ dazu kann der Reaktor anstelle von zwei verschiedenen Abscheidern 20, 22 auch nur einen Abscheider 20, 22 umfassen. Oberhalb des oberen Abscheiders 22 befinden sich die als Überläufe ausgestalteten Flüssigkeitsabfuhrleitungen 16, 16', über welche das gereinigte Wasser aus dem Reaktor 10 abgezogen wird.

Auf dem Reaktor 10 ist eine Gastrenneinrichtung 26 angeordnet, die mit den beiden Abscheidern 20, 22 über die Leitungen 28, 28' verbunden ist. Zudem führt von dem Boden der Gastrenneinrichtung 26 eine Sinkleitung 30 in den unteren Teil des Reaktors 10.

Schließlich ist in dem Reaktor 10 ein Ablenkmittel 32 vorgesehen, welches zwei Ablenkplatten 34, 34' umfasst. Die beiden Ablenkplatten 34, 34' sind in dem Reaktor 10 von der Reaktoraußenwand aus zu der Reaktormitte gesehen, schräg nach unten angeordnet, wobei diese, bezogen auf die in der Fig. 1 gestrichelt dargestellte Horizontale, eine Neigung (□) von etwa 45° aufweisen. Beide Ablenkplatten 34, 34' enden mit einem Abstand zu der Reaktoraußenwand, so dass diese von in dem Reaktor befindlichem Abwasser hinterflutbar sind. Zwischen den beiden Ablenkplatten 34, 34' wird ein rinnenförmiger Spalt 36 ausgestaltet, in dessen Bereich die Feststoffabfuhrleitung 18 mündet. Unterhalb der beiden Ablenkplatten 34, 34' sind zwei bis zu dem Reaktorboden verlaufende schräg verlaufende Schikanen 38, 38' vorgesehen, welche eine Verteilung des Sediments über den gesamten Querschnitt des Reaktorbodens verhindern. Zur Stützung der beiden Ablenkplatten 34, 34' können, in der Fig. 1 nicht dargestellt, pro Ablenkplatte 34, 34' ein oder mehr Stützelemente vorgesehen sein, welche beispielsweise von dem Reaktorboden zu der Unterseite der Ablenkplatten 34, 34' vertikal angeordnete Stützstangen oder Stützplatten sein können.

Beim Betrieb des Reaktors wird über die Zulaufleitung 14 zu reinigendes Abwasser in den Reaktorbehälter 12 eingeführt, welches sich in dem Reaktorbehälter 12 mit dem in dem Reaktor 10 befindlichen Medium, welches aus bereits teilweise gereinigtem Abwasser, Mikroorganismenpellets, welche in der Fig. 1 durch kleine Punkte angedeutet sind, und kleinen Gasbläschen besteht, vermischt. Das eingeführte Abwasser strömt in dem Reaktorbehälter 12 langsam aufwärts, bis es in die mikroorganismenhaltige Schlammpellets enthaltende Fermentationszone gelangt. Die in den Pellets enthaltenen Mikroorganismen zersetzen die in dem Abwasser enthaltenen organischen Verunreinigungen hauptsächlich zu Methan- und Kohlendioxidgas. Durch die erzeugten Gase entstehen Gasbläschen, von denen sich die größeren von den Pellets ablösen und in Form von Gasblasen durch das Medium perlen, wohingegen kleine Gasbläschen an den Schlammpellets haften bleiben. Diejenigen Pellets, an denen kleine Gasbläschen anhaften und welche daher ein geringeres spezifisches Gewicht als die anderen Pellets und das Wasser aufweisen, steigen in dem Reaktorbehälter 12 auf, bis sie den unteren Abscheider 20 erreichen.

Die freien Gasbläschen fangen sich in den Gashauben 24 und bilden unter dem First der Gashauben 24 ein Gaspolster. Das in den Gashauben 24 gesammelte Gas sowie eine geringe Menge mitgeschleppter Pellets und Wasser werden beispielsweise über eine in der Stirnseite der Gashauben 24 vorhandene Öffnung (nicht dargestellt) aus den Gashauben 24 abgeführt und über die Leitung 28 in die Gastrenneinrichtung 26 geführt.

Das Wasser, die aufsteigenden Mikroorganismenpellets und die Gasblasen, die nicht bereits in dem unteren Abscheider 20 abgetrennt wurden, steigen in dem Reaktorbehälter 12 weiter nach oben bis zu dem oberen Abscheider 22. Aufgrund der Abnahme des hydrostatischen Drucks zwischen dem unteren Abscheider 20 und dem oberen Abscheider 22 lösen sich die letzten kleinen Gasbläschen von den in den oberen Abscheider 22 gelangten Mikroorganismenpellets ab, so dass das spezifische Gewicht der Pellets wieder zunimmt und die Pellets nach unten sinken. Die restlichen Gasblasen werden in den Gashauben 24 des oberen Abscheiders 22 aufgefangen und wiederum an den Stirnseiten der einzelnen Gashauben 24 in eine Gassammelleitung überführt, von der das Gas über die Leitung 28' in den Gasseparator 26 geführt wird. Das nunmehr gereinigte Wasser steigt von dem oberen Abscheider 22 weiter nach oben, bis es über die Wasserabfuhrleitungen 16, 16' aus dem Reaktor 10 abgeleitet wird.

In dem Gasseparator 26 trennt sich das Gas von dem restlichen Wasser und den Mikroorganismenpellets, wobei die Suspension aus Pellets und dem Abwasser über die Sinkleitung 30 in den Reaktorbehälter 12 rezirkuliert wird.

Je nach dem Ursprung des dem Reaktor 10 über die Zulaufleitung 14 zugeführten Abwassers enthält das Abwasser mehr oder weniger Feststoffe. Abwasser aus der Papierindustrie beispielsweise enthält signifikante Konzentrationen an festen Füllstoffmaterialien und Kalk. Der Anteil der in dem Abwasser enthaltenen Feststoffe, der ein Mindestmaß an spezifischer Dichte übersteigt, sinkt bereits nach dem Ausströmen aus der Zulaufleitung 14 in dem Reaktor 10 nach unten. Ferner fällt ein Teil des in dem Abwasser enthaltenden Kalks, nachdem das Abwasser in die Schlammbettzone aufgestiegen ist, an den Schlammpellets aus. Dadurch übersteigt ein Teil der Schlammpellets eine kritische spezifische Dichte und sinkt infolge dessen aus dem Schlammbett ebenfalls herunter. Aufgrund der Geometrie und Anordnung des Ablenkmittels 32 wird sichergestellt, dass sich die herabsinkenden Feststoffe nicht auf den Ablenkplatten 34, 34' ablagern, sondern von den Außenflächen der Ablenkplatten 34, 34' abrutschen und sich in dem rinnenförmigen Spalt 36 in unmittelbarer Nähe der Feststoffabfuhrleitung 18 sammeln, weswegen diese über die Feststoffabfuhrleitung 18 vollständig aus dem Reaktor 10 abgezogen werden können. Dabei kann die Abführung des Sediments kontinuierlich und oder chargenweise erfolgen.

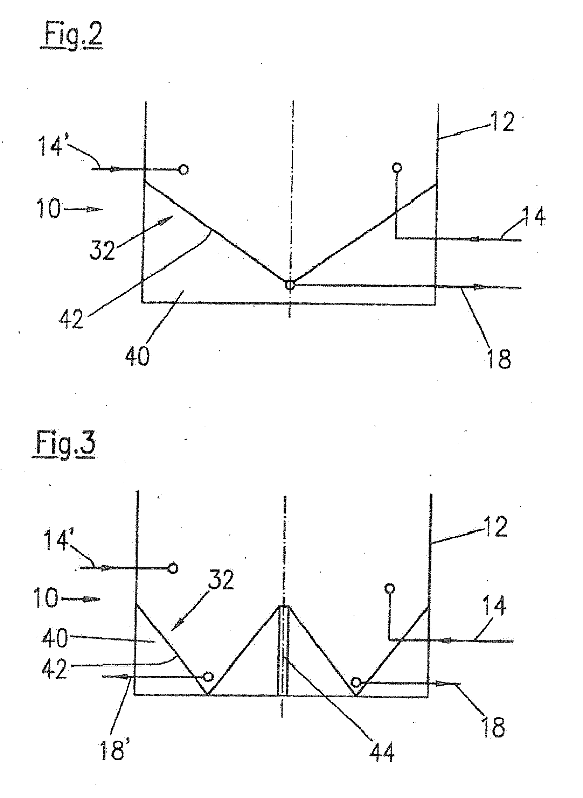

In der Fig. 2 ist der untere Abschnitt eines Reaktors 10 zur anaeroben Reinigung von Abwasser gemäß eines weiteren Ausführungsbeispiels der vorliegenden Erfindung im schematischen Längsschnittsansicht dargestellt. Bei diesem Ausführungsbeispiel wird das Ablenkmittel 32 durch Schüttgut 40 ausgebildet, welches in der Form eines negativen Kegels angeordnet ist. Die Oberfläche des negativen Kegels aus Schüttgut 40 ist in der Fig. 2 durch die Bezugsziffer 42 dargestellt.

Beim Betrieb des Reaktors gemäß dieses Ausführungsbeispiels werden die in dem Reaktor 10 herabsinkenden Feststoffe auf der Oberfläche 42 des negativen Kegels aus Schüttgut 40 zu der in der Reaktormitte angeordnetem Spitze des negativen Kegels umgelenkt, in deren Bereich sich die Feststoffabfuhrleitung 18 befindet, über welche das Sediment vollständig aus dem Reaktor 10 abgeführt wird.

In der Fig. 3 ist der untere Abschnitt eines Reaktors 10 zur anaeroben Reinigung von Abwasser gemäß eines weiteren Ausführungsbeispiels der vorliegenden Erfindung im schematischen Längsschnittsansicht dargestellt. Auch bei diesem Ausführungsbeispiel wird das Ablenkmittel 32 durch Schüttgut 40 ausgebildet. Im Unterschied zu dem in der Fig. 2 dargestellten Ausführungsbeispiel ist hier auf dem Reaktorboden in dem Bereich der Reaktormitte eine sich vertikal nach oben erstreckende Trennwand 44 vorgesehen, wobei zwischen den beiden Seitenflächen der Trennwand 44 und der Reaktoraußenwand jeweils als Ablenkmittel 32 aus Schüttgut 40 in der Form eines negativen Kegels angeordnet ist. Jeweils im Bereich der Spitzen der beiden negativen Kegel sind Feststoffabfuhrleitungen 18, 18' vorgesehen, über welche der Feststoff aus dem Reaktor 10 abgezogen wird.

### Bezugszeichenliste

- 10: Reaktor zur biologischen Abwasserreinigung
- 12: Reaktorbehälter
- 14, 14': Abwasserzulaufleitung
- 16, 16': Flüssigkeitsabfuhrleitung für gereinigtes Abwasser
- 18, 18': Feststoffabfuhrleitung
- 20: unterer Abscheider
- 22: oberer Abscheider
- 24: Gashaube
- 26: Gastrenneinrichtung
- 28, 28': Leitungen
- 30: Sinkleitung
- 32: Ablenkmittel
- 34, 34': Ablenkplatte
- 36: rinnenförmiger Spalt
- 38, 38': Schikane
- 40: Schüttgut
- 42: Oberfläche des negativen Kegels
- 44: Trennwand

## Patentansprüche

1. Reaktor (10) zur biologischen, insbesondere anaeroben, Reinigung von Abwasser umfassend einen Reaktorbehälter (12) mit einem zumindest im Wesentlichen flachen oder runden Boden, wenigstens eine im unteren Bereich des Reaktorbehälters (12) angeordnete Zulaufleitung (14, 14') zur Zuführung von zu reinigendem Abwasser in den Reaktor (10), wenigstens eine Flüssigkeitsabfuhrleitung (16, 16') zur Abführung von gereinigtem Abwasser aus dem Reaktor (10) und wenigstens eine im unteren Bereich des Reaktorbehälters (12) angeordnete Feststoffabfuhrleitung (18, 18') zur Abführung von Feststoff aus dem Reaktor (10), wobei in dem unteren Bereich des Reaktorbehälters (12) wenigstens ein Ablenkmittel (32) vorgesehen ist, welches wenigstens ein schräg verlaufendes Teilstück umfasst und derart ausgestaltet und/oder angeordnet ist, dass in dem Reaktor (10) aus dem oberen Reaktorbereich nach unten sinkender Feststoff so umgelenkt wird, dass dieser in dem Bereich der wenigstens einen Feststoffabfuhrleitung (18, 18') sedimentiert und so über die wenigstens eine Feststoffabfuhrleitung (18, 18') aus dem Reaktor (10) abführbar ist,
dadurchgekennzeichnet,dass
das wenigstens eine Ablenkmittel (32) auf dem Reaktorboden angeordnetes Schüttgut ist, welches in der Form eines negativen Kegels angeordnet ist.

2. Reaktor (10) nach Anspruch 1,
dadurchgekennzeichnet, dass
die wenigstens eine Feststoffabfuhrleitung (18, 18') in dem Bereich der Spitze des negativen Kegels aus Schüttgut vorgesehen ist.

3. Reaktor (10) zur biologischen, insbesondere anaeroben, Reinigung von Abwasser umfassend einen Reaktorbehälter (12) mit einem zumindest im Wesentlichen flachen oder runden Boden, wenigstens eine im unteren Bereich des Reaktorbehälters (12) angeordnete Zulaufleitung (14, 14') zur Zuführung von zu reinigendem Abwasser in den Reaktor (10), wenigstens eine Flüssigkeitsabfuhrleitung (16, 16') zur Abführung von gereinigtem Abwasser aus dem Reaktor (10) und wenigstens eine im unteren Bereich des Reaktorbehälters (12) angeordnete Feststoffabfuhrleitung (18, 18') zur Abführung von Feststoff aus dem Reaktor (10), wobei in dem unteren Bereich des Reaktorbehälters (12) wenigstens ein Ablenkmittel (32) vorgesehen ist, welches wenigstens ein schräg verlaufendes Teilstück umfasst und derart ausgestaltet und/oder angeordnet ist, dass in dem Reaktor (10) aus dem oberen Reaktorbereich nach unten sinkender Feststoff so umgelenkt wird, dass dieser in dem Bereich der wenigstens einen Feststoffabfuhrleitung (18, 18') sedimentiert und so über die wenigstens eine Feststoffabfuhrleitung (18, 18') aus dem Reaktor (10) abführbar ist,
**dadurch gekennzeichnet, dass**
auf dem Reaktorboden in dem Bereich der Reaktormitte eine sich vertikal nach oben erstreckende Trennwand (44) vorgesehen ist und zwischen den beiden Seitenflächen der Trennwand (44) und der Reaktoraußenwand als Ablenkmittel (32) jeweils Schüttgut (40) vorgesehen ist, welches jeweils in der Form eines negativen Kegels angeordnet ist.

4. Reaktor (10) nach Anspruch 3,
**dadurch gekennzeichnet, dass**
in diesem zwei Feststoffabfuhrleitungen (18, 18') vorgesehen sind, von denen jede jeweils in den Bereich der Spitze eines der beiden negativen Kegel aus Schüttgut (40) mündet.

5. Reaktor (10) nach zumindest einem der Ansprüche 1 bis 4,
**dadurch gekennzeichnet, dass**
das Schüttgut (40) Sediment ist, welches beim Betrieb des Reaktors (10) aus dem zu reinigenden Abwasser sedimentiert.

6. Verfahren zur biologischen, insbesondere anaeroben, Reinigung von Abwasser, bei dem einem Reaktor (10) nach einem der Ansprüche 1 bis 5, welcher einen Reaktorbehälter (12) mit einem zumindest im Wesentlichen flachen oder runden Boden, wenigstens eine im unteren Bereich des Reaktorbehälters (12) angeordnete Zulaufleitung (14, 14') zur Zuführung von zu reinigendem Abwasser in den Reaktor (10), wenigstens eine Flüssigkeitsabfuhrleitung (16, 16') zur Abführung von gereinigtem Abwasser aus dem Reaktor (10) und wenigstens eine im unteren Bereich des Reaktorbehälters (12) angeordnete Feststoffabfuhrleitung (18, 18') zur Abführung von Feststoff aus dem Reaktor (10) umfasst, wobei in dem unteren Bereich des Reaktorbehälters (12) wenigstens ein Ablenkmittel (32) vorgesehen ist, welches wenigstens ein schräg verlaufendes Teilstück umfasst und derart ausgestaltet und/oder angeordnet ist, dass in dem Reaktor (10) aus dem oberen Reaktorbereich nach unten sinkender Feststoff so umgelenkt wird, dass dieser in dem Bereich der wenigstens einen Feststoffabfuhrleitung (18, 18') sedimentiert, zu reinigendes Abwasser zugeführt wird und Sediment über die wenigstens eine Feststoffabfuhrleitung (18, 18') aus dem Reaktor (10) abgeführt wird.
